(19) Europäisches Patentamt
European Patent Office
Office européen des brevets

(11) **EP 3 254 507 B1**

(12) **EUROPEAN PATENT SPECIFICATION**

(45) Date of publication and mention
of the grant of the patent:
**08.08.2018 Bulletin 2018/32**

(21) Application number: **15705848.8**

(22) Date of filing: **06.02.2015**

(51) Int Cl.:
**H04W 52/34** *(2009.01)* **H04W 52/36** *(2009.01)*
**H04W 52/54** *(2009.01)* **H04W 52/14** *(2009.01)*

(86) International application number:
**PCT/IB2015/050922**

(87) International publication number:
**WO 2016/124984 (11.08.2016 Gazette 2016/32)**

(54) **DYNAMIC CELL BREATHING FOR POWER SAVING**

DYNAMISCHE ZELLATMUNG ZUR ENERGIEEINSPARUNG

RESPIRATION DE CELLULE DYNAMIQUE POUR ÉCONOMISER L'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.12.2017 Bulletin 2017/50**

(73) Proprietor: **Telefonaktiebolaget LM Ericsson
(publ)
164 83 Stockholm (SE)**

(72) Inventors:
• **REN, Hong
Kanata, Ontario K2M 2X2 (CA)**
• **LUO, Kevin
Nepean, Ontario K2J 0Z3 (CA)**

(74) Representative: **Zacco Sweden AB
P.O. Box 5581
114 85 Stockholm (SE)**

(56) References cited:
**EP-A1- 1 953 964          WO-A1-2013/192356
WO-A1-2014/036710      WO-A2-02/25836
US-A1- 2010 165 934    US-A1- 2012 082 064
US-A1- 2012 122 512    US-A1- 2013 301 492**

• **CONTE A ET AL: "Cell wilting and blossoming for
energy efficiency", IEEE WIRELESS
COMMUNICATIONS, IEEE SERVICE CENTER,
PISCATAWAY, NJ, US, vol. 18, no. 5, 1 October
2011 (2011-10-01), pages 50-57, XP011507934,
ISSN: 1536-1284, DOI:
10.1109/MWC.2011.6056692**

## Description

### Technical Field

The present disclosure relates to adjusting a power level of a radio access node.

### Background

In a cellular communications network, some radio access nodes (such as base stations) are deployed to provide geographical coverage of an area and provide one or more coverage cells. Other radio access nodes are deployed to provide additional capacity (to serve additional users or provide additional bandwidth) and provide one or more capacity cells. When the cell loading is not high or the capacity demand is not high, the full capacity of one or more capacity cells may not be needed. However, those capacity cells usually transmit the overhead channels at full power regardless of the cell loading. This can result in a large waste of energy.

To save energy, the concept of sleep mode was proposed in "Cell wilting and blossoming for energy efficiency," Wireless Communications, IEEE, vol. 18, no. 5, pp. 50-57, October 2011 (hereinafter "the Conte Paper") to allow some cells to enter a sleep mode when the network loading is not high. A cell is completely turned off if the cell is in sleep mode. The cell will be brought back to the normal mode when the network loading becomes high. In order to reduce impacts to the cellular communications network, the wilting (turning off the cell) and blossoming (turning on the cell) are performed slowly.

There are several issues with the sleep mode proposal described in the Conte Paper that may have negative impacts to the quality of service for users of the cellular communications network. As such, there is a need for systems and methods of operating a radio access node in a cellular communications network to provide energy efficiency and possibly also to dynamically balance the loading across coverage cells and capacity cells.

Document WO 02/25836 A2 may be construed to disclose a power control system method for controlling the downlink (DL) transmit power from a base station (BS) to a mobile station (MS) in a cellular telecommunications network. A power balancing value $\Delta P$ is divided into a number of smaller correction implements which are distributed over a plurality of spaced apart slots for DL power control. For example, if it is desired to correct DL transmit power by six dB, a total of six different correction values of one dB each may be implemented with adjacent ones of the correction values being spaced apart by a number of slots. The distribution or spreading of DL transmit power corrections over a period of time results in a plurality of smaller corrections as opposed to one or a few large corrections, thereby reducing potential adverse effects on the inner loop power control of the network.

Document WO 2013/192356 discloses systems and methods to affect the activity of a base station transmitter (BTS) in a cellular communications network based, at least in part, on operating conditions. In one particular example implementation, a BTS in a cellular communication network may be placed in a reduced power consumption state in response to events or conditions indicative of reduced demand for service in the cell serviced by the BTS.

### Summary

The invention is defined by the appended independent claims. Dependent claims constitute embodiments of the invention.

Systems and methods for dynamic cell breathing for power saving are disclosed. In some embodiments, a method of operation of a radio access node in a cellular communications network includes determining a target transmit power level from multiple predetermined transmit power levels for the radio access node. The method also includes determining that the current transmit power level of the radio access node should be adjusted to reach the target transmit power level and, in response to determining that the current transmit power level of the radio access node should be adjusted, adjusting a transmit power level of the radio access node from the current transmit power level to the target transmit power level via multiple transmit power level adjustments. Adjusting the power level of the radio access node via more than one transmit power level adjustment makes it possible to avoid some of the issues with the sleep mode proposal described in the Conte paper, according to some embodiments.

In some embodiments, each power level adjustment is less than or equal to a power adjustment threshold. In some embodiments, the power adjustment threshold is equal to 1 decibel (dB).

In some embodiments, the method also includes, for each power level adjustment, notifying one or more wireless devices served by a cell provided by the radio access node of the power level adjustment of the transmit power level of the radio access node prior to the power level adjustment. In some embodiments, notifying the one or more wireless devices includes sending a paging message to the one or more wireless devices.

In some embodiments, the method also includes broadcasting to the one or more wireless devices served by a cell provided by the radio access node an updated transmit power level after each power level adjustment. In some embodiments, each power level adjustment is completed within a respective modification period and broadcasting the updated transmit power level occurs in a beginning interval of a next modification period immediately following the respective modification period. In some embodiments, each power level adjustment is completed within an end interval of a respective modification period.

In some embodiments, the method also includes determining that there is not enough time to notify one or more wireless devices served by a cell controlled by the radio access node that the current transmit power level of the radio access node will be adjusted before the end of a modification period and, in response to determining that there is not enough time, waiting to adjust the current transmit power level until a different modification period.

In comparative examples, determining the target transmit power level for the radio access node includes determining the target transmit power level for the radio access node based on a loading of a first cell controlled by the radio access node. In some comparative examples, determining the target transmit power level for the radio access node based on the loading of the first cell includes determining the target transmit power level for the radio access node based on the loading of the first cell by using a lookup table. In some comparative examples, determining the target transmit power level for the radio access node based on the first cell loading includes determining that the loading of the first cell is within a new loading range other than a loading range corresponding to the current transmit power level and, in response to determining that the loading of the first cell is within the new loading range, setting the target transmit power level for the radio access node to correspond to the new loading range.

In some comparative examples, determining the target transmit power level for the radio access node based on the loading of the first cell includes determining that the loading of the first cell has increased and, in response to determining that the loading of the first cell has increased, determining the target transmit power level for the radio access node based on the loading of the first cell and a loading increase table. In some comparative examples, determining the target transmit power level for the radio access node based on the loading of the first cell includes determining that the loading of the first cell has decreased and, in response to determining that the loading of the first cell has decreased, determining the target transmit power level for the radio access node based on the loading of the first cell and a loading decrease table.

In some comparative examples, determining the target transmit power level for the radio access node includes determining the target transmit power level for the radio access node based on one or more neighbor cell loadings of respective one or more neighbor cells. In some comparative examples, determining the target transmit power level for the radio access node includes comparing one or more neighbor cell loadings against a loading threshold for the neighbor cells.

In some comparative examples, determining the target transmit power level for the radio access node includes receiving a loading information from a neighbor cell and determining the target transmit power level for the radio access node based on the loading information from the neighbor cell.

In some embodiments, determining the target transmit power level for the radio access node includes receiving a request to increase the current transmit power level of the radio access node from a neighbor cell, and in response to receiving the request, determining that the current transmit power level can be increased and, in response to determining that the current power level can be increased, setting the target transmit power level for the radio access node higher than the current transmit power level.

In some embodiments, the method also includes refraining from transmitting downlink transmissions with Quadrature Amplitude Modulation (QAM) during the transmit power level adjustments. In some embodiments, the method also includes refraining from transmitting downlink transmissions during the transmit power level adjustments. In some embodiments, the radio access node is a base station. In some embodiments, a cell provided by the radio access node is a capacity cell or a coverage cell.

In some embodiments, a device is adapted to determine a target transmit power level from predetermined transmit power levels for the radio access node. The device is also adapted to determine that the current transmit power level of the radio access node should be adjusted to reach the target transmit power level and, in response to determining that the current transmit power level of the radio access node should be adjusted, adjust a transmit power level of the radio access node from the current transmit power level to the target transmit power level via multiple transmit power level adjustments.

In some embodiments, a radio access node in a cellular communications network includes at least one processor and a memory coupled to the processor. The memory contains instructions executable by the at least one processor whereby the radio access node is operative to determine a target transmit power level from predetermined transmit power levels for the radio access node, determine that the current transmit power level of the radio access node should be adjusted to reach the target transmit power level, and, in response to determining that the current transmit power level of the radio access node should be adjusted, adjust a transmit power level of the radio access node from the current transmit power level to the target transmit power level via multiple transmit power level adjustments.

In some embodiments, a radio access node includes a target transmit power level determining module operative to determine a target transmit power level from predetermined transmit power levels for the radio access node. The radio access node also includes a current transmit power level adjustment determining module operative to determine that the current transmit power level of the radio access node should be adjusted to reach the target transmit power level and a power level adjustment module operative to, in response to determining that the current transmit power level of the radio access node should be adjusted, adjust a transmit power level of the radio access node from the current transmit power level to the target transmit power level via multiple transmit power level adjustments.

Those skilled in the art will appreciate the scope of the present disclosure and realize additional aspects thereof after reading the following detailed description of the embodiments in association with the accompanying drawing figures.

## Brief Description of the Drawings

The accompanying drawing figures incorporated in and forming a part of this specification illustrate several aspects of the disclosure, and together with the description serve to explain the principles of the disclosure.

Figure 1 illustrates a cellular communications network according to some embodiments of the present disclosure;

Figure 2 illustrates the operation of a radio access node for dynamic cell breathing for power saving according to some comparative examples;

Figure 3 illustrates the operation of a radio access node for determining a target transmit power level of the radio access node using loading ranges according to some comparative examples;

Figure 4 illustrates the operation of a radio access node for adjusting a power level of the radio access node via more than one transmit power level adjustment and notifying one or more wireless devices of the adjustments according to some embodiments of the present disclosure;

Figure 5 illustrates a modification period according to some embodiments of the present disclosure;

Figures 6A and 6B illustrate the operation of a radio access node for adjusting a power level of the radio access node via more than one transmit power level adjustment and sending a paging message to one or more wireless devices according to some embodiments of the present disclosure;

Figure 7 illustrates the operation of a radio access node for determining the target transmit power level for the radio access node based on the cell loading according to some comparative examples;

Figure 8 illustrates the operation of a radio access node for determining the target transmit power level for the radio access node based on the cell loading according to some comparative examples;

Figure 9 illustrates the operation of a radio access node for receiving a request from a neighbor cell according to some comparative examples;

Figure 10 illustrates the operation of a radio access node for receiving a cell loading from a neighbor cell according to some comparative examples;

Figure 11 illustrates the operation of a radio access node for determining if there is enough time to notify one or more wireless devices that the current transmit power level of the radio access node will be adjusted before the end of a modification period according to some embodiments of the present disclosure;

Figure 12 is a block diagram of a radio access node according to some embodiments of the present disclosure;

Figure 13 is a block diagram of a wireless device according to some embodiments of the present disclosure; and

Figure 14 is a block diagram of a radio access node for dynamic cell breathing for power saving according to some embodiments of the present disclosure.

## Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

Before discussing the embodiments of the current disclosure, an exemplary cellular communications network 10 is discussed. Cellular communications network 10, may comprise, e.g., a Long Term Evolution (LTE) network (e.g., Frequency Division Duplexing (FDD) or Time Division Duplexing (TDD)), a Universal Terrestrial Radio Access (UTRA) network, a Code Division Multiple Access (CDMA) network, WiMAX, a Global System for Mobile Communications (GSM) network, or any network employing any one or more Radio Access Technologies (RATs) for cellular operation. The description of many of the embodiments provided herein focuses on LTE and, as such, LTE terminology is oftentimes used; however, the embodiments described herein are not limited to the LTE RAT.

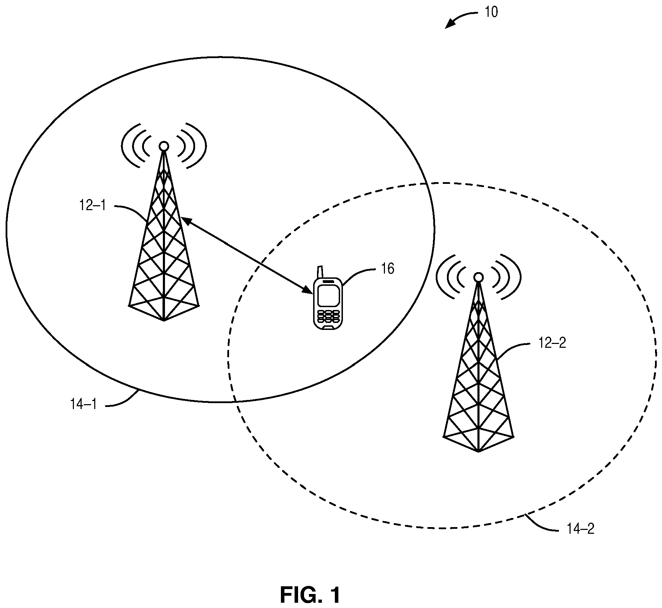

In Figure 1, radio access node 12-1 (referred to herein as radio access node 12 or radio access nodes 12) provides a cell 14-1 (referred to herein as cell 14 or cells 14). In this exemplary cellular communications network 10, the cell 14-1 serves wireless device 16, allowing communication between the radio access node 12-1 and wireless device 16 (referred to herein as wireless device 16 or wireless devices 16). While only one wireless device 16 is shown here for simplicity, the current disclosure is not limited thereto. A wireless device 16 may be a User Equipment (UE). Figure 1 also shows radio access node 12-2 which provides a cell 14-2. Cell 14-2 is a neighbor cell to cell 14-1 which means that cell 14-2 either overlaps with cell 14-1 or borders cell 14-1 such that a wireless device 16 may travel from cell 14-2 to cell 14-1. While cells 14-1 and 14-2 are shown as overlapping in Figure 1, the current disclosure is not limited thereto.

As discussed above, in order to save energy, the concept of sleep mode was proposed in "Cell wilting and blossoming for energy efficiency," Wireless Communications, IEEE, vol. 18, no.5, pp. 50-57, October 2011 (hereinafter "the Conte Paper") which enables some cells 14 to enter a sleep mode when the network loading is not high. A cell 14 is completely turned off if the cell 14 is in sleep mode. The cell 14 will be brought back to the normal mode when the network loading becomes high.

There are several issues with the sleep mode proposal described in the Conte Paper that may have negative impacts on the quality of service for users of the cellular communications network 10. When turning on or turning off a cell 14, the transmit power change is large. In order to reduce impacts to the cellular communications network 10, the turning off of the cell 14 and the turning on of the cell 14 may be performed slowly, as described in the Conte Paper. In the sleep mode proposal described in the Conte Paper, the transmit power of the cell 14 is reduced by half each time. Even with this approach, the impact on network performance can be substantial.

First, the magnitude of the transmit power change is still quite large for the first few changes. The sudden large change in radio link can have significant impact on handover success. Also, since the transmit power is changed gradually, the time to completely turn on or turn off a cell 14 is substantial. During the whole period of turning off a cell, the users served by the cell 14 are not informed, and system performance may suffer as a result. For example, in a LTE cellular communications network 10, the transmit power level of the Reference Signal (RS) is broadcast and is used by a wireless device 16 to perform Uplink (UL) power control. If the wireless device 16 is not aware of the adjustment to the transmit power level when the cell 14 is turned off slowly, the wireless device 16 may be power controlled to increase its transmit power significantly. This causes high interference to wireless devices 16 in neighbor cells 14 and can eventually lead to dropped calls.

When a cell 14 is brought back to the normal mode, wireless devices 16 in neighbor cells 14 will be handed over to the cell 14. During the handover, signaling and user data are exchanged between the cell 14 and the wireless device 16. The adjustment to the transmit power level impacts the Downlink (DL) demodulation and decoding. Wireless devices 16 that are in the process of being handed over may not be able to receive some critical information on time. If the handovers of the wireless devices 16 to the new cell 14 cannot be accomplished quickly, the cell 14 becomes a large interference source, and the calls will be dropped.

Also, in the sleep mode proposal described in the Conte Paper, impacts on the cellular communications network 10 and energy savings are sensitive to the loading thresholds. If the sleep mode threshold is too high, when the cell 14 is turned off, some calls cannot be handed over to a neighboring cell 14, and those calls will be dropped, or the neighbor cell 14 may become overloaded If the sleep mode threshold is too low, the time that a cell 14 is in sleep mode is short, and the energy saved is less than desired.

As such, there is a need for systems and methods of operating a radio access node in a cellular communications network to provide energy efficiency while avoiding some of the issues with the sleep mode proposal described in the Conte Paper that may have negative impacts to the quality of service for users of the cellular communications network 10.

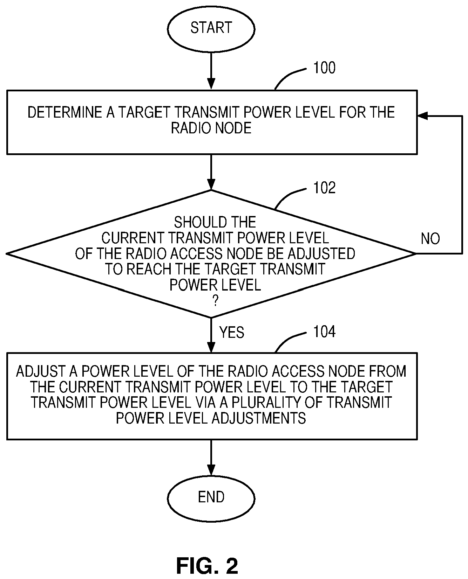

Therefore, Figure 2 illustrates the operation of a radio access node 12 for dynamic cell breathing for power saving according to some embodiments of the present disclosure. First, the radio access node 12 determines a target transmit power level for the radio access node 12 (step 100). The radio access node 12 then determines whether the current transmit power level of the radio access node 12 should be adjusted to reach the target transmit power level (step 102). If the current transmit power level of the radio access node 12 should not be adjusted, the method returns to step 100, according to some embodiments. If the radio access node 12 determines that the current transmit power level of the radio access node 12 should be adjusted, the radio access node 12 adjusts a power level of the radio access node 12 from the current transmit power level to the target transmit power level via more than one transmit power level adjustment (step 104). Each of the power level adjustments results in an operational transmit power level. In other words, the transmit power level resulting from each power level adjustment is an operational transmit power level. As used herein, an operational transmit power level is a transmit power level about which one or more wireless devices 16 is notified. Adjusting the power level of the radio access node 12 via more than one transmit power level adjustment makes it possible to avoid some of the issues with the sleep mode proposal described in the Conte Paper, according to some embodiments. The change in the size of the cell 14 due to adjustment of the power level of the radio access node 12 is referred as cell breathing herein.

This method eliminates the limitation of binary states (sleep mode or normal mode), and allows a cell 14 to transmit at many power levels between zero and the full transmit power, according to some embodiments. This method can potentially save a large amount of power with minimal impact on network performance. In addition, the adjusting of the transmit power may be done without manual involvement of network operators, according to some embodiments. This method is more robust than the sleep mode proposal described in the Conte Paper, since the network impacts and the power saving efficiency are less sensitive to a determination of the cell loading and the choice of sleep mode threshold.

When a cell 14 increases its transmit power, wireless devices 16 that see the cell 14 as a better serving cell will be handed over to the cell 14. Similarly, when the cell 14 decreases its transmit power, wireless devices 16 that are currently served by the cell 14 may be handed over to a neighbor cell 14. If the transmit power change is slow enough, the failure rate for handovers due to transmit power change can be reduced to a very low level. In some embodiments, when the transmit power of the cell 14 is changed, the transmit power for every channel is changed while the transmit power ratio between any two channels remains unchanged. In some embodiments, each transmit power level adjustment is less than or equal to 2 decibels (dB), or even less than or equal to 1 dB. By keeping the transmit power level adjustment small, the impact on the cellular communications network 10 may be reduced.

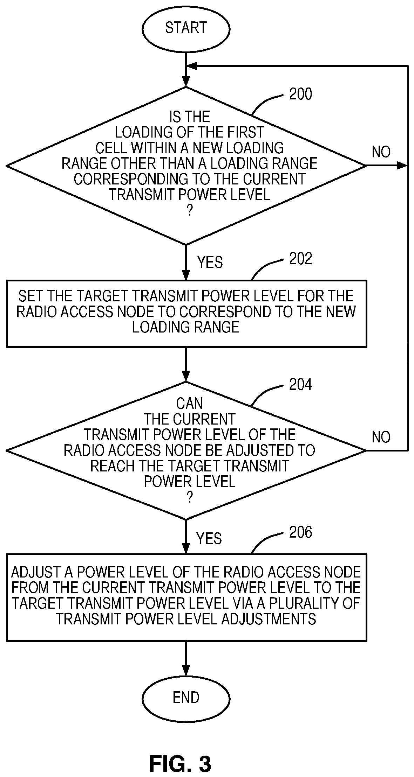

In some comparative examples, determining the target transmit power level for the radio access node 12 in step 100 of Figure 2 may include determining the target transmit power level for the radio access node 12 based on the cell loading by using a lookup table. For instance, every cell loading value may correspond to a target transmit power level for the radio access node 12. Figure 3 illustrates the operation of a radio access node 12 for determining a target transmit power level of the radio access node using loading ranges according to some comparative examples. The radio access node 12 determines if the loading of a first cell is within a new loading range other than a loading range corresponding to the current transmit power level (step 200). These loading ranges may be in the form of a lookup table such as Table 1 below.

Table 1

| Loading ranges | Target Power Level |
|---|---|
| 100% >= L> L1 | P1 |
| L1 >= L > L2 | P2 |
| L2 >= L > L3 | P3 |
| L3 >= L > L4 | P4 |
| L4 >= L > L5 | P5 |

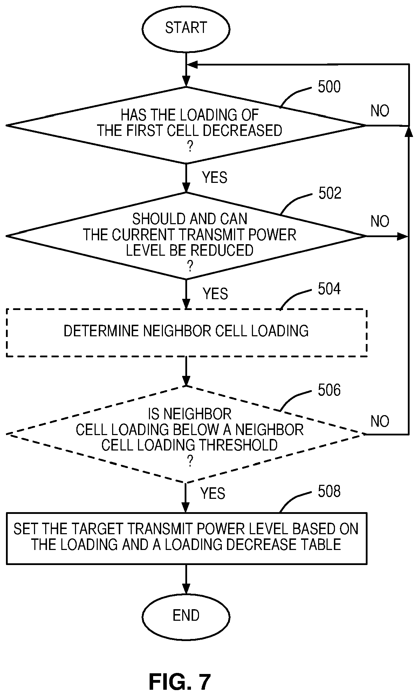

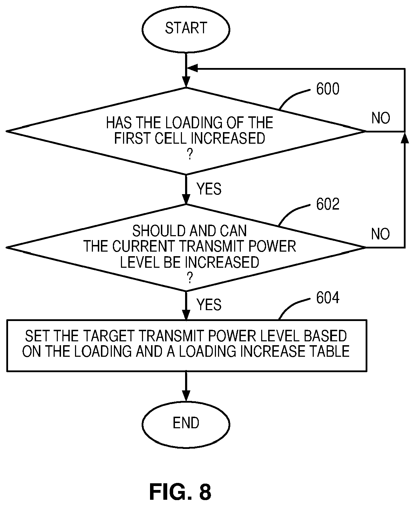

Table 1 illustrates an example where P1 corresponds to the highest transmit power level of the radio access node 12, and P5 corresponds to the lowest transmit power level of the radio access node 12 and may correspond to an off state or a sleep state. The table may have any number of predefined transmit power levels, and the values of L1 through L5 could be any decreasing set of loading values. Returning to Figure 3, if the radio access node 12 determines loading of the first cell is within a new loading range other than the loading range corresponding to the current transmit power level, the radio access node 12 sets the target transmit power level for the radio access node 12 to correspond to the new loading range (step 202). Using the example lookup table in Table 1, if the current transmit power level is set to P1, the highest transmit power level, and the loading of the first cell is determined to fall between L2 and L3, the target transmit power level will be set to P3. The radio access node 12 then determines whether the current transmit power level of the radio access node 12 can be adjusted to reach the target transmit power level (step 204). In some cases, the current transmit power level cannot be adjusted because the power level is as low or as high as it can be or perhaps because of some other criteria such as neighbor cell loading or preset restrictions. If the current transmit power level of the radio access node 12 cannot be adjusted, the method returns to step 200, according to some comparative examples. If the radio access node 12 determines that the current transmit power level of the radio access node 12 can be adjusted, the radio access node 12 adjusts a power level of the radio access node 12 from the current transmit power level to the target transmit power level via more than one transmit power level adjustment (step 206). When using a single lookup table for mapping power levels to loading ranges, it is often desirable to avoid increasing and decreasing power too often when the loading varies around a loading threshold (i.e. a ping-pong effect). One way to address this problem is to use a filtered loading value. A simple solution is to use an average loading value over a predefined amount of time. Another way to determine a filtered loading value is through use of an equation such as

$$L_i = (1-\alpha)L_{i-1} + \alpha * l$$

where $L_i$ and $L_{i-1}$ are the current and the previous filtered loadings, $l$ is the latest loading measurement and $\alpha$ is a forgetting factor (a is a constant between zero and one). If $\alpha$ equals 1, there is no filtering because the previous filtered loading is given zero weight. As $\alpha$ approaches zero, the filtering is increasingly based on past measurements, decreasing the volatility of the filtered loading values. This is only one way to introduce hysteresis to avoid the ping-pong effect. Another method will be discussed below in relation to Figures 7 and 8.

In an LTE cellular communications network 10, when a cell 14 adjusts its transmit power, several aspects of the network performance may be impacted. While these examples are given in relation to an LTE cellular communications network 10, the current disclosure is not limited thereto. First, for Physical Uplink Shared Channel (PUSCH) power control, a wireless device 16 uses the RS transmit power to estimate DL pathloss, which is then used for power control. When the transmit power of the cell 14 is adjusted, the RS power is changed accordingly. If the wireless device 16 is not aware of the transmit power adjustment, its DL pathloss estimation will be inaccurate, which may cause the wireless device 16 to adjust its PUSCH transmit power inappropriately. Secondly, the selection of a random access preamble group is affected by the pathloss estimation of the wireless device 16. The preamble group is used to indicate the message size for message 3 in the LTE random access procedure. If the wireless device 16 is not aware of the transmit power adjustment, its DL pathloss estimation will be inaccurate, which may cause the wireless device 16 to select a random access preamble group that is inappropriate. Thirdly, the RS is used for Channel Quality Indicator (CQI) measurement. When RS power is adjusted, it can cause some CQI measurement error. If the wireless device 16 is not aware of the transmit power adjustment, CQI measurement made by the wireless device 16 will be inaccurate.

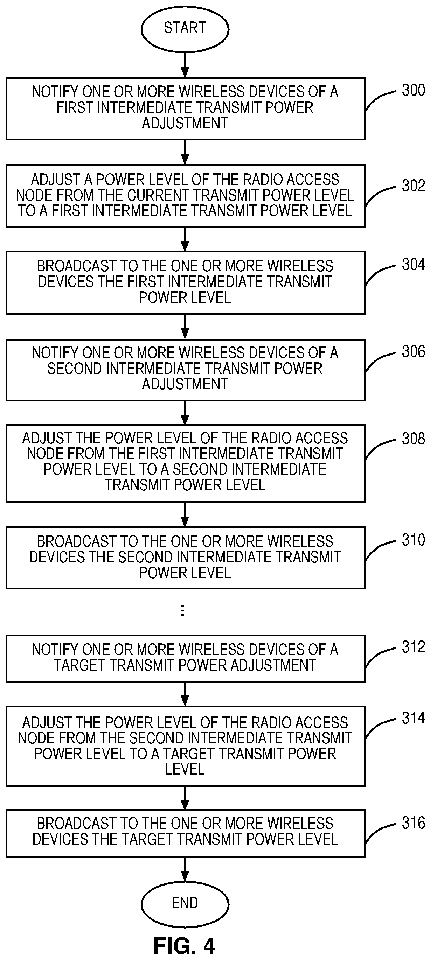

In order to address these issues caused by the wireless device 16 not being aware of the transmit power adjustment, Figure 4 illustrates the operation of a radio access node 12 for adjusting a power level of the radio access node 12 via more than one transmit power level adjustment and notifying one or more wireless devices 16 of the adjustments according to some embodiments of the present disclosure. In some embodiments, the steps in Figure 4 may be part of step 104 in Figure 1 where the radio access node 12 adjusts a power level of the radio access node 12 from the current transmit power level to the target transmit power level via more than one transmit power level adjustment. First, the radio access node 12 notifies one or more wireless devices 16 of a first intermediate transmit power adjustment (step 300). This notification may be accomplished in many ways, some of which will be discussed below. Next, the radio access node 12 adjusts a power level of the radio access node 12 from the current transmit power level to a first intermediate transmit power level (step 302). The radio access node 12 then broadcasts to the one or more wireless devices 16 the first intermediate transmit power level (step 304). In some embodiments, this broadcast may be unnecessary because the notification in step 300 includes the information about the new transmit power level. Since, in this embodiment, the radio access node 12 adjusts the power via more than one transmit power level adjustment, the radio access node 12 then notifies one or more wireless devices 16 of a second intermediate transmit power adjustment (step 306) and adjusts the power level of the radio access node 12 from the first intermediate transmit power level to a second intermediate transmit power level (step 308). The radio access node 12 then broadcasts to the one or more wireless devices 16 the second intermediate transmit power level (step 310). Depending on how many total adjustments are made between the current transmit power level and the target transmit power level, more or fewer intermediate power level adjustments may be needed. In the embodiment illustrated in Figure 3, the radio access node 12 notifies one or more wireless devices 16 of a target transmit power adjustment (step 312) and adjusts the power level of the radio access node 12 from a $k^{th}$ intermediate transmit power level to the target transmit power level (step 314). The radio access node 12 then broadcasts to the one or more wireless devices 16 the target transmit power level (step 316). As discussed above, by making the transmit power level adjustment via more than one transmit power level adjustment, the rate of handover failures may be reduced. Also, since the wireless devices 16 are being notified of the adjustments, the wireless devices 16 may be able to use the updated information to properly estimate the DL pathloss for PUSCH power control and random access preamble group selection, as well as measuring CQI values, according to some embodiments.

Before one possible implementation of the method illustrated in Figure 3 is discussed, some details on how RS DL power level information is communicated in LTE cellular communications networks may be beneficial. In LTE, the DL RS power level is included in System Information Block Type 2 (SIB2) and is broadcast to wireless devices 16 in a System Information (SI) message. All SI messages are transmitted periodically. In a period, the same system information, such as SIB2, can be repeated several times within a window. System information including SIB2 cannot be changed within a predefined modification period. In LTE, the system information modification period is a multiple of 640 ms while the SI period is a multiple of 80 ms. The window is limited between 1 ms and 40 ms. For SIB2, the recommended period is 80 ms, and the transmission window always starts with subframe 0 in the first radio frame of the period. As long as the modification period is an integer times the SIB2 period, the new SIB2 information will be transmitted in the first radio frame of a modification period when SIB2 is changed. In LTE, a paging message is used to inform wireless devices 16 in Radio Resource Control (RRC) idle and connected states about a system information change, as the wireless devices may not always decode SI messages such as SIB2 if no change in content is expected.

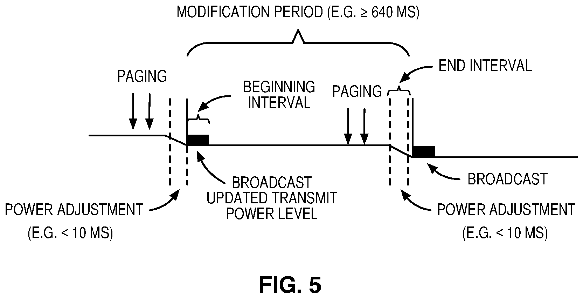

As one example of when the transmit power level is adjusted and when the wireless devices 16 are notified, Figure 5 illustrates a modification period according to some embodiments of the present disclosure. The transmit power level is adjusted only once within a modification period, and the power level is adjusted close to the end of the modification period, the end interval. The end interval should be small and may be 10 ms or less in some embodiments. Figure 5 shows paging messages are sent to notify the wireless devices 16 to check for a new transmit power level in the next modification period. These paging messages can be sent at any time, but in some embodiments they are sent with enough time before the end of the modification period such that each of the wireless devices 16 can receive and decode the paging message. Figure 5 also shows that the broadcast with the adjusted transmit power level is broadcast at the beginning of a modification period.

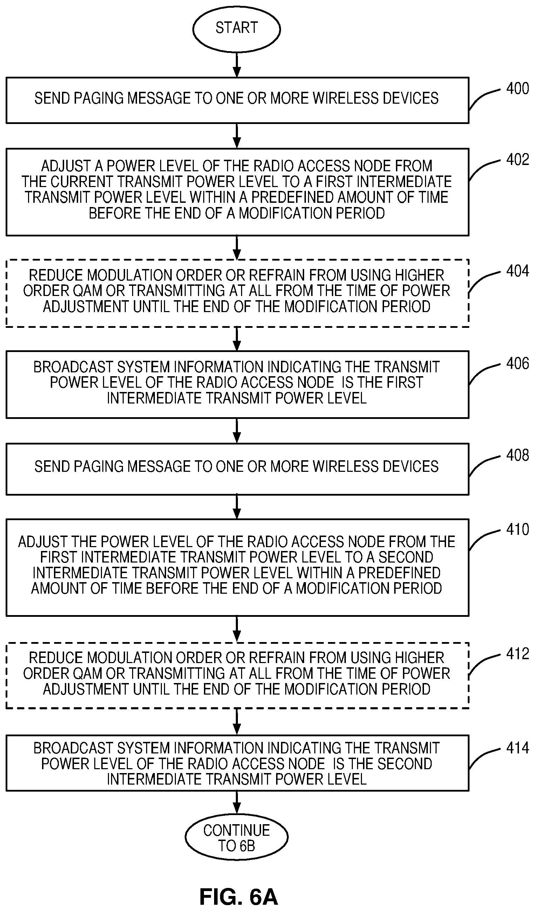

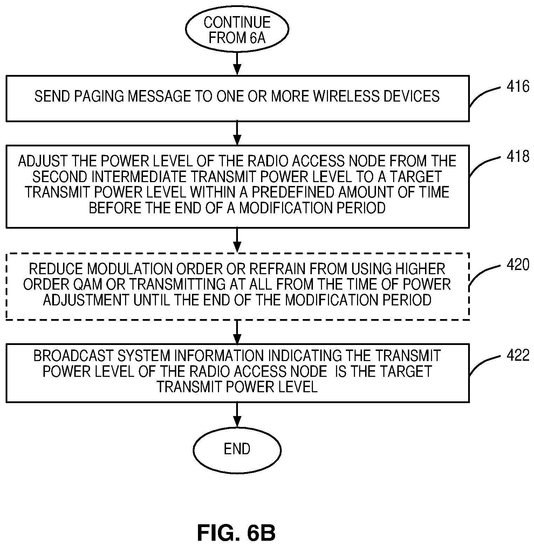

Figures 6A and 6B illustrate the operation of a radio access node 12 for adjusting a power level of the radio access node 12 via more than one transmit power level adjustment and sending a paging message to one or more wireless devices 16 according to some embodiments of the present disclosure.

In some embodiments, the steps in Figures 6A and 6B may be part of step 104 in Figure 1 where the radio access node 12 adjusts a power level of the radio access node 12 from the current transmit power level to the target transmit power level via more than one transmit power level adjustment. In this method, the radio access node 12 sends a paging message to one or more wireless devices (step 400). In some embodiments, this paging message may inform the wireless devices 16 that the transmit power level of the radio access node 12 is going to be or already has been adjusted. In some embodiments, this paging message may inform the wireless devices 16 that an upcoming SI message such as a SIB2 message may contain updated information.

Next, the radio access node 12 adjusts a power level of the radio access node 12 from the current transmit power level to a first intermediate transmit power level within a predefined amount of time before the end of a modification period (step 402). By making the transmit power level adjustment within a predefined amount of time before the end of a modification period, the amount of time the wireless devices 16 are actually receiving a different transmit power level than the wireless devices 16 are expecting can be controlled. In some embodiments, this predefined period of time is made as small as is practical such that the actual adjustment to the transmit power level is made very close to the time when the radio access node 12 will be able to send out updated transmit power level information. During the time between the power adjustment and the end of the modification period, the radio access node 12 will be using a transmit power level that is different than the one the wireless devices 16 expect. Some Modulation and Coding Schemes (MCSs) have both amplitude and phase modulation components and, as such, rely on the wireless device 16 to know ahead of time what the power level of the transmission is in order to properly decode the transmission. QPSK, as well as other MCSs, do not have an amplitude component and, as such, do not require the wireless device 16 to know the power level of the transmission to properly decode the transmission. Because of this, in some embodiments, the radio access node 12 optionally reduces the modulation order or refrains from using higher order QAM or any other amplitude dependent MCS, yet allows only BPSK and QPSK or other MCS that are not amplitude dependent, and may even refrain from transmitting data at all during this period (step 404).

In the method illustrated in Figures 6A and 6B, the radio access node 12 sends out updated transmit power level information by broadcasting system information indicating the transmit power level of the radio access node 12 is the first intermediate transmit power level (step 406). In some embodiments, this may be an SI message such as a SIB2 message. As a result of the paging message in step 400, the wireless devices (e.g., the wireless device 16) know to read the system information. Importantly, in LTE, the wireless devices 16 do not automatically read the system information since the system information may not frequently change.

As before, since in this embodiment, the radio access node 12 adjusts the power via more than one transmit power level adjustment, the radio access node 12 then again sends a paging message to one or more wireless devices 16 (step 408) and adjusts the power level of the radio access node 12 from the first intermediate transmit power level to a second intermediate transmit power level within a predefined amount of time before the end of a modification period (step 410). In some embodiments, the adjustment to the second intermediate transmit power level is made within the predefined amount of time before the end of the modification period immediately following the modification period during which (or at the end of which) the adjustment to the first intermediate transmit power level was made in step 402. As above, the radio access node 12 optionally reduces the modulation order or refrains from using higher order QAM, yet allows only BPSK and QPSK or other MCS that are not amplitude dependent, and may even refrain from transmitting data at all during this period (step 412). Again, the radio access node 12 broadcasts system information indicating the transmit power level of the radio access node 12 is the second intermediate transmit power level (step 414).

Depending on how many total adjustments are made between the current transmit power level and the target transmit power level, more or fewer intermediate power level adjustments may be needed. In the embodiment illustrated in Figures 6A and 6B, the radio access node 12 sends a paging message to one or more wireless devices 16 (step 416) and adjusts the power level of the radio access node 12 from the second intermediate transmit power level to the target transmit power level within a predefined amount of time before the end of a modification period (step 418). As above, the radio access node 12 optionally reduces the modulation order or refrains from using higher order QAM, yet allows only BPSK and QPSK or other MCS that are not amplitude dependent, and may even refrain from transmitting data at all during this period (step 420). Again, the radio access node 12 broadcasts system information indicating the transmit power level of the radio access node 12 is the second intermediate transmit power level (step 422). Note that while Figure 4 illustrates at least three adjustments, there may be any number of one or more adjustments depending on the current and target transmit power levels.

In some embodiments, a paging message is sent to each one of the one or more wireless devices. In other embodiments, a paging message is sent to only a subset of the one or more wireless devices. For example, if one of the one or more wireless devices wakes up earlier than other devices, a single paging message can be sent to the awoken wireless device only. If more wireless devices wake up at the same time, a paging message can be sent to all awoken devices. In yet other embodiments, multiple paging messages can be sent to some or all of the one or more wireless devices, such as for robustness.

Step 100 in Figure 2 illustrated the radio access node 12 determining a target transmit power level for the radio access node 12. While this target transmit power level can be determined in many ways, Figures 7-9 illustrate some possible embodiments for determining the target transmit power level of the radio access node 12. While these figures are shown as separate embodiments, any combination or all three methods may be employed to determine the target transmit power level of the radio access node 12. In a cellular communications network 10, the cell loadings of a cell 14 and its neighbor cells 14 are monitored. The cell loading of a cell 14 can be determined in several ways such as by the number of connected wireless devices 16 or the utilization of the radio resources of the cell 14. In addition to the cell loading, the locations of wireless devices 16 in the cell 14 may also be evaluated to determine if a wireless device 16 will be offloaded to a neighbor cell 14 if the transmit power of the radio access node 12 is reduced. The cell loading (and optionally the wireless device 16 location) information may be used to determine if the wireless devices 16 currently served by the cell 14 can be offloaded successfully to one or more neighbor cells 14 when the transmit power of the cell 14 is reduced, or if the cell loadings of the neighbor cells 14 are high enough that the cell 14 should increase its transmit power to take some wireless devices 16 from its neighbor cells 14.

Figure 7 illustrates the operation of a radio access node 12 for determining the target transmit power level for the radio access node 12 based on the cell loading according to some comparative examples. First, the radio access node 12 determines if the loading of a first cell decreased (step 500). If the radio access node 12 determines that the loading of a first cell has decreased, this is an indication that the transmit power level of the radio access node 12 may need to be reduced in order to save power, according to some comparative examples. Next, the radio access node 12 determines if the current transmit power level should and can be reduced (step 502). In some cases, the current transmit power level should not be reduced to avoid a ping-pong effect or because of some other criteria. In some cases, the current transmit power level cannot be reduced because the power level is as low as it can be or perhaps because of some other criteria such as neighbor cell loading or preset restrictions. At this point, the radio access node 12 may optionally determine the cell loading of one or more neighbor cells 14 (step 504). In these comparative examples, the radio access node 12 determines if the cell loading of the one or more neighbor cells 14 is below a neighbor cell loading threshold (step 506). If the cell loading of the one or more neighbor cells 14 is not below a neighbor cell loading threshold, this may indicate that this would not be an appropriate time to reduce the transmit power level of the radio access node 12 because the one or more neighbor cells 14 may not be able to accept the wireless devices 16 currently being served by the radio access node 12. In this case, the method returns to step 500 and continues to monitor the cell loading of the radio access node 12 and the neighbor cells 14. If the cell loading of the one or more neighbor cells 14 is below a neighbor cell loading threshold (step 506), the radio access node 12 sets the target transmit power level of the radio access node 12 based on the loading and a loading decrease table (step 508). As one example, the loading decrease table may be Table 2 below. As before, P1 corresponds to the highest transmit power level of the radio access node 12, and P5 corresponds to the lowest transmit power level of the radio access node 12 and may correspond to an off state or a sleep state.

Table 2

| Loading ranges | Target Power Level |
|---|---|
| 100% >= L > 78% | P1 |
| 78% >= L> 58% | P2 |
| 58% >= L > 38% | P3 |
| 38% >= L > 18% | P4 |
| L <= 18% | P5 |

Figure 8 illustrates the operation of a radio access node 12 for determining the target transmit power level for the radio access node 12 based on the cell loading according to some comparative examples. First, the radio access node 12 determines if a loading of a first cell has increased (step 600). If the radio access node 12 determines that the loading of the first cell has increased, this is an indication that the transmit power level of the radio access node 12 may need to be increased in order to provide additional services to the wireless devices 16, according to some comparative examples. Next, the radio access node 12 determines if the current transmit power level should and can be increased (step 602). In some cases, the current transmit power level should not be increased to avoid a ping-pong effect or because of some other criteria. In some cases, the current transmit power level cannot be increased because the power level is as high as it can be or perhaps because of some other criteria such as neighbor cell loading or preset restrictions. If the current transmit power level can be increased, the radio access node 12 sets the target transmit power level of the radio access node 12 based on the loading and a loading increase table (step 604). As one example, the loading increase table may be Table 3 below. As before, P1 corresponds to the highest transmit power level of the radio access node 12 and P5 corresponds to the lowest transmit power level of the radio access node 12 and may correspond to an off state or a sleep state.

Table 3

| Loading ranges | Target Power Level |
|---|---|
| 100% >= L > 82% | P1 |
| 82% >= L > 62% | P2 |
| 62% >= L > 42% | P3 |
| 42% >= L > 22% | P4 |
| L <= 22% | P5 |

In comparative examples using two tables such as a loading decrease table and a loading increase table, the instantaneous loading measurement can be used to determine the target transmit power level. Hysteresis can be included in such a mapping to avoid a ping-pong effect where the target transmit power level changes back and forth multiple times with only a small fluctuation in cell loading value. This hysteresis is accomplished by making some of the transitions in one table different than the transitions in the other table. As an example, assume that the initial transmit power level is the highest power P1. Assume the first loading measurement is 75%, which results in a target power level of P2, according to both Table 2 and Table 3. Then the power needs to be adjusted to P2. The loading of 75% that triggers the power adjustment is recorded. Assume the next measured loading is 80%. Since 80% is above the recorded 75%, Table 3 for loading increase should be used. Based on Table 3, the target transmit power level is the same as the current transmit power level, and thus no power adjustment is needed. Assume the next measured loading is 60%. Since 60% is below the recorded 75%, Table 2 for loading decrease should be used. Based on Table 2, the target transmit power level is the same as the current level, and, again, no transmit power adjustment is needed.

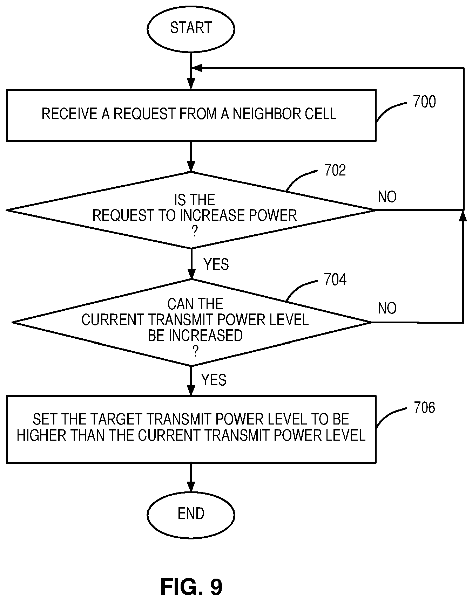

Figure 9 illustrates the operation of a radio access node 12 for receiving a request from a neighbor cell 14 according to some comparative examples (step 700). The radio access node 12 determines if the request is to increase the transmit power level of the radio access node 12 (step 702). In some comparative examples, if a neighbor cell 14 is experiencing high cell loading, the neighbor cell may request that the radio access node 12 increase its transmit power level in order to possibly initiate a handover of one or more wireless devices 16 from the neighbor cell 14 to the cell provided by the radio access node 12. If the request from the neighbor cell 14 is to increase the transmit power level of the radio access node 12, the radio access node 12 determines if the current transmit power level can be increased (step 704). In some cases, the current transmit power level cannot be increased because the power level is as high as it can be or perhaps because of some other criteria such as neighbor cell loading or preset restrictions. If the current transmit power level can be increased, the radio access node 12 sets the target transmit power level of the radio access node 12 to be higher than the current transmit power level of the radio access node 12 (step 706).

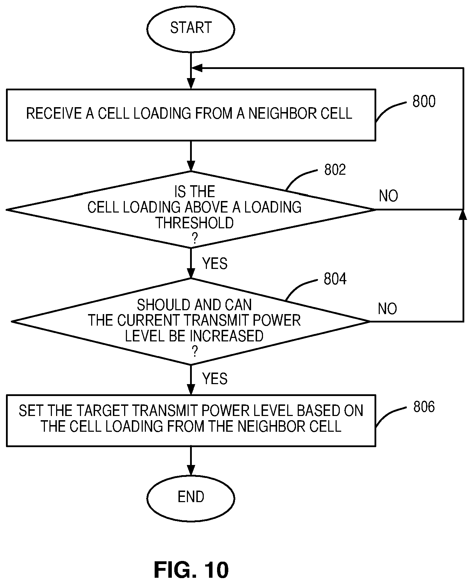

Figure 10 illustrates the operation of a radio access node 12 for receiving a cell loading from a neighbor cell 14 according to some comparative examples (step 800). The radio access node 12 determines if the cell loading is above a threshold (step 802). In some comparative examples, if a neighbor cell 14 is experiencing high cell loading, the radio access node 12 may receive a cell loading from the neighbor cell 14 and decide to increase its transmit power level in order to possibly initiate a handover of one or more wireless devices 16 from the neighbor cell 14 to the cell provided by the radio access node 12. If the cell loading is above a threshold, the radio access node 12 determines if the current transmit power level should and can be increased (step 804). In some cases, the current transmit power level should not be increased to avoid a ping-pong effect or because of some other criteria. In some cases, the current transmit power level cannot be increased because the power level is as high as it can be or perhaps because of some other criteria such as neighbor cell loading or preset restrictions. If the current transmit power level can be increased, the radio access node 12 sets the target transmit power level of the radio access node 12 based on the cell loading from the neighboring cell (step 806).

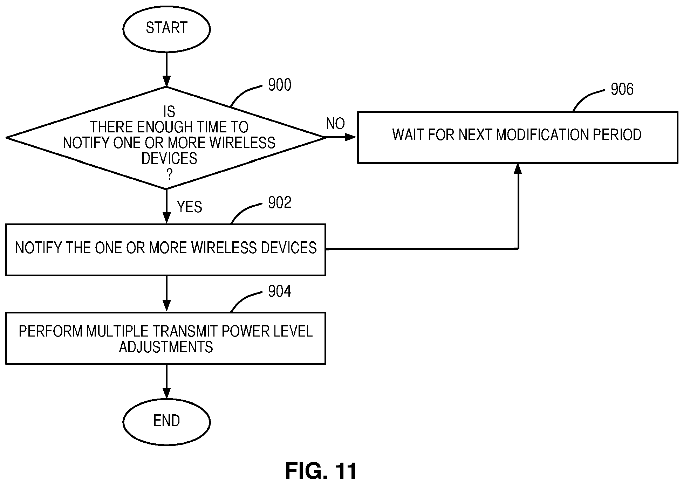

The method illustrated in Figure 4 showed that one or more wireless devices 16 were notified before the transmit power of the radio access node 12 was adjusted. In those embodiments, that notification served to inform the wireless devices 16 that the transmit power level would be adjusted. Figure 11 illustrates the operation of a radio access node 12 for determining if there is enough time to notify one or more wireless devices 16 that the current transmit power level of the radio access node 12 will be adjusted before the end of a modification period according to some embodiments of the present disclosure (step 900). If there is enough time to notify one or more wireless devices 16 that the current transmit power level of the radio access node 12 will be adjusted before the end of a modification period, the radio access node 12 notifies the one or more wireless devices 16 (step 902) and performs a transmit power level adjustment (step 904). If there is not enough time to notify one or more wireless devices 16 that the current transmit power level of the radio access node 12 will be adjusted before the end of a modification period, the radio access node 12 waits for the next modification period (step 906) and then performs steps 902 and 904. While this may increase the amount of time (the amount of modification periods) that are needed to reach a target transmit power level of the radio access node 12, it may reduce the chances that one or more wireless devices are unaware of the adjustment to the transmit power level of the radio access node 12.

Specifically, in an LTE cellular communications network 10, wireless devices 16 are not required to decode SIB2 messages unless the wireless devices 16 have been informed that the information is updated. In some embodiments, the information included in a SIB2 message is considered valid by a wireless device for three hours from the moment the SIB2 message was acquired. One way of notifying the wireless devices 16 of the updated information in a SIB2 is to send a paging request that contains the flag systemInfoModification set to TRUE. This informs the wireless devices 16 that the SIB2 message in the next modification period may contain updated information, such as an adjusted transmit power level. While the radio access node 12 could send the paging messages in a few subframes just before the end of the modification period, there is a chance that one or more of the wireless devices 16 may not receive a paging message sent during that time. One reason for this is that one or more of the wireless devices 16 may be operating in Discontinuous Reception (DRX) mode. While operating in DRX mode, the one or more wireless devices 16 only check for paging messages periodically. In some embodiments, in order to determine that there is enough time to notify the wireless devices 16, the radio access node 12 needs to check the DRX parameters for the wireless devices 16 to determine if each of the wireless devices 16 in a DRX mode will have a waking period when a paging message may be received.

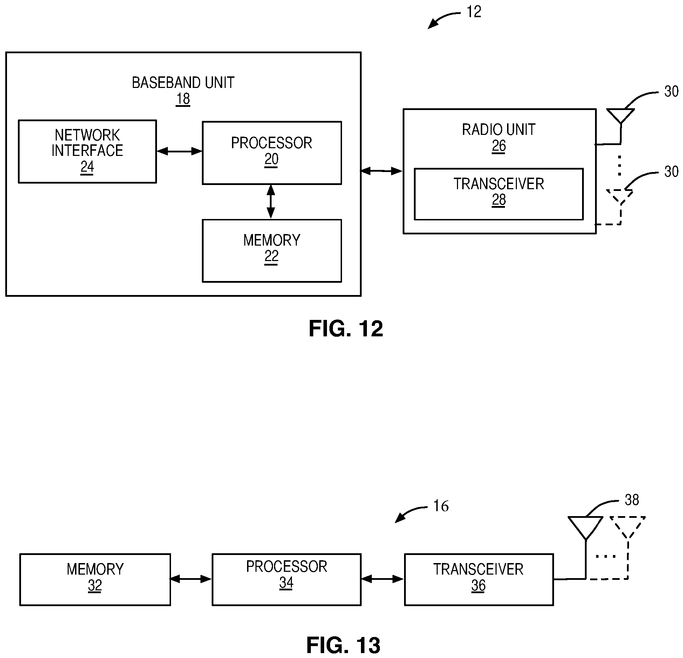

Figure 12 is a block diagram of a radio access node 12 (e.g., a base station) according to some embodiments of the present disclosure. As illustrated, the radio access node 12 includes a baseband unit 18 including one or more processors 20, memory 22, and a network interface 24, and a radio unit 26 including a transceiver 28 connected to one or more antennas 30. The transceiver 28 generally includes analog and, in some embodiments, digital components for wirelessly sending and receiving data to and from the wireless devices 16. From a wireless communications protocol view, the transceiver 28 implements at least part of Layer 1 (i.e., the Physical or "PHY" Layer).

The one or more processors 20 generally implement any remaining portion of Layer 1 not implemented by the transceiver 28, as well as functions for higher layers in the wireless communications protocol (e.g., Layer 2 (data link layer), Layer 3 (network layer), etc.). In particular embodiments, the one or more processors 20 may comprise, for example, one or several general-purpose or special-purpose microprocessors or other microcontrollers programmed with suitable software and/or firmware to carry out some or all of the functionality of the radio access node 12 described herein. In addition or alternatively, the one or more processors 20 may comprise various digital hardware blocks (e.g., one or more Application Specific Integrated Circuits (ASICs), one or more off-the-shelf digital and analog hardware components, or a combination thereof) configured to carry out some or all of the functionality of the radio access node 12 described herein. Additionally, in particular embodiments, the above-described functionality of the radio access node 12 may be implemented, in whole or in part, by the one or more processors 20 executing software or other instructions stored on a non-transitory computer-readable medium such as, for example, the memory 22 or any other suitable type of data storage component(s).

Figure 13 is a block diagram of a wireless device 16 according to some embodiments of the present disclosure. As illustrated, the wireless device 16 includes a memory 32, a processor 34, and a transceiver 36 connected to one or more antennas 38. The transceiver 36 generally includes analog and, in some embodiments, digital components for wirelessly sending and receiving data to and from the radio access node 12. From a wireless communications protocol view, the transceiver 36 implements at least part of Layer 1 (i.e., the Physical or "PHY" Layer). The processor 34 generally implements any remaining portion of Layer 1 not implemented by the transceiver 36, as well as functions for higher layers in the wireless communications protocol (e.g., Layer 2 (data link layer), Layer 3 (network layer), etc.). In particular embodiments, the processor 34 may comprise, for example, one or several general-purpose or special-purpose microprocessors or other microcontrollers programmed with suitable software and/or firmware to carry out some or all of the functionality of the wireless device 16 described herein. In addition or alternatively, the processor 34 may comprise various digital hardware blocks (e.g., one or more ASICs, one or more off-the-shelf digital and analog hardware components, or a combination thereof) configured to carry out some or all of the functionality of the wireless device 16 described herein. Additionally, in particular embodiments, the above-described functionality of the wireless device 16 may be implemented, in whole or in part, by the processor 34 executing software or other instructions stored on a non-transitory computer-readable medium, such as the memory 32 or any other suitable type of data storage component(s).

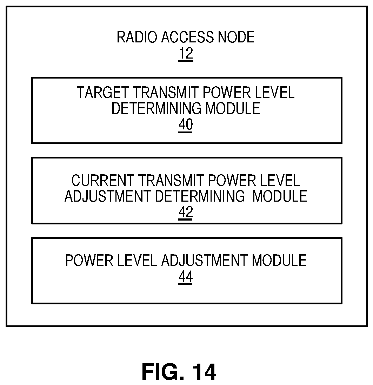

Figure 14 is a block diagram of a radio access node 12 for dynamic cell breathing for power saving according to some embodiments of the present disclosure. As illustrated, the radio access node 12 includes a target transmit power level determining module 40, a current transmit power level adjustment determining module 42, and a power level adjustment module 44 that are each implemented in software that, when executed by a processor of the radio access node 12, causes the radio access node 12 to operate according to any one of the embodiments described herein. The target transmit power level determining module 40 operates to provide the functionality of the radio access node 12 with respect to steps 100, 200, 202, 500-508, 600-604, 700-706, or 800-806 described above. Likewise, the current transmit power level adjustment determining module 42 operates to provide the functionality of the radio access node 12 with respect step 102 or 204 described above. The power level adjustment module 44 operates to provide the functionality of the radio access node 12 with respect to steps 104, 300-316, or 400-422 described above.

In one embodiment, a computer program includes instructions which, when executed by at least one processor, causes the at least one processor to carry out the functionality of the radio access node 12 according to any one of the embodiments described herein. In one embodiment, a carrier containing the aforementioned computer program product is provided. The carrier is one of an electronic signal, an optical signal, a radio signal, or a computer-readable storage medium (e.g., a non-transitory computer-readable medium such as the memory 22 shown in Figure 12).

The following acronyms are used throughout this disclosure.

- ASIC Application Specific Integrated Circuits
- BPSK Binary Phase Shift Keying
- CDMA Code Division Multiple Access
- CQI Channel Quality Indicator
- DRX Discontinuous Reception
- dB Decibel
- DL Downlink
- FDD Frequency Division Duplexing
- GSM Global System for Mobile Communications
- LTE Long Term Evolution
- MCS Modulation and Coding Scheme
- PHY Physical
- PUSCH Physical Uplink Shared Channel
- QAM Quadrature Amplitude Modulation
  o QPSK Quadrature Phase Shift Keying
- RAT Radio Access Technology
- RRC Radio Resource Control
- RS Reference Signal
- SI System Information
- SIB2 System Information Block Type 2
- TDD Time Division Duplexing
- UE User Equipment
- UL Uplink
- UTRA Universal Terrestrial Radio Access
- WiMax Worldwide Interoperability for Microwave Access

Those skilled in the art will recognize improvements and modifications to the embodiments of the present disclosure. All such improvements and modifications are considered within the scope of the claims that follow.

**Claims**

1. A method of operation of a radio access node (12) in a cellular communications network (10) comprising:

determining (100) a target transmit power level from a plurality of predetermined transmit power levels for the radio access node (12);
determining (102) that a current transmit power level of the radio access node (12) should be adjusted to reach the target transmit power level;
in response to determining that the current transmit power level of the radio access node (12) should be adjusted, adjusting (104) a transmit power level of the radio access node (12) from the current transmit power level to the target transmit power level via a plurality of transmit power level adjustments;
determining (900) that there is not enough time to notify one or more wireless devices (16) served by a cell (14) controlled by the radio access node (12) that the current transmit power level of the radio access node (12) will be adjusted before the end of a modification period; and
in response to determining that there is not enough time, waiting (906) to adjust the current transmit power level until a different modification period.

2. The method of claim 1 wherein each power level adjustment of the plurality of transmit power level adjustments is less than or equal to a power adjustment threshold.

3. The method of claim 2 wherein the power adjustment threshold is equal to 1 dB.

4. The method of claim 2 further comprising, for each power level adjustment of the plurality of power level adjustments, notifying (300, 306, 312) one or more wireless devices (16) served by a cell (14) provided by the radio access node (12) of the power level adjustment of the transmit power level of the radio access node (12) prior to the power level adjustment.

5. The method of claim 4 wherein notifying the one or more wireless devices (16) comprises sending (400, 408, 416) a paging message to the one or more wireless devices (16).

6. The method of claim 1 further comprising broadcasting (304, 310, 316, 406, 414, 422) to one or more wireless devices (16) served by a cell (14) provided by the radio access node (12) an updated transmit power level after each power level adjustment of the plurality of power level adjustments.

7. The method of claim 6 wherein each power level adjustment of the plurality of transmit power level adjustments is completed within a respective modification period; and
broadcasting the updated transmit power level occurs in a beginning interval of a next modification period immediately following the respective modification period.

8. The method of claim 1 wherein each power level adjustment of the plurality of transmit power level adjustments is completed within an end interval of a respective modification period.

9. The method of any of the preceding claims further comprising refraining (404, 412, 420), during the time between the power adjustment and the end of the modification period, from transmitting downlink transmissions with Quadrature Amplitude Modulation, QAM, during the plurality of transmit power level adjustments.

10. The method of any of the preceding claims further comprising refraining (404, 412, 420), during the time between the power adjustment and the end of the modification period, from transmitting downlink transmissions during the plurality of transmit power level adjustments.

11. The method of any of any of the preceding claims wherein the radio access node (12) is a base station.

12. The method of any of any of the preceding claims wherein a cell (14) provided by the radio access node (12) is one of a capacity cell and a coverage cell.

13. A computer-readable medium (22) comprising code portions which, when executed on a processor (20), configure the processor to perform all steps of a method according to any one of the preceding method claims.

14. A radio access node (12) in a cellular communications network, comprising:

at least one processor (20); and
a memory (22) coupled to the processor (20), the memory (22) containing instructions executable by the at least one processor (20) whereby the radio access node (12) is operative to:

determine a target transmit power level from a plurality of predetermined transmit power levels for the radio access node (12);
determine that a current transmit power level of the radio access node (12) should be adjusted to reach the target transmit power level;
in response to determining that the current transmit power level of the radio access node (12) should be adjusted, adjust a transmit power level of the radio access node (12) from the current transmit power level to the target transmit power level via a plurality of transmit power level adjustments;
determine that there is not enough time to notify one or more wireless devices (16) served by a cell (14) controlled by the radio access node (12) that the current transmit power level of the radio access node (12) will be adjusted before the end of a modification period; and
in response to determining that there is not enough time, wait to adjust the current transmit power level until a different modification period.

15. The radio access node of claim 14 adapted to perform the method of any of claims 2 to 8.

**Patentansprüche**

1. Verfahren zum Betrieb eines Funkzugangsknotens (12) in einem zellularen Kommunikationsnetz (10), umfassend:

Bestimmen (100) eines Übertragungsleistungszielpegels aus einer Vielzahl von vorbestimmten Übertragungsleistungspegeln für den Funkzugangsknoten (12);
Bestimmen (102), dass ein aktueller Übertragungsleistungspegel des Funkzugangsknotens (12), eingestellt werden sollte, um den Übertragungsleistungszielpegel zu erreichen;
als Reaktion auf das Bestimmen, dass der aktuelle Übertragungsleistungspegel des Funkzugangsknotens (12) eingestellt werden sollte, Einstellen (104) eines Übertragungsleistungspegels des Funkzugangsknotens (12) von dem aktuellen Übertragungsleistungspegel auf den Übertragungsleistungszielpegel über eine Vielzahl von Leistungspegel-Einstellungen;
Bestimmen (900), dass nicht genügend Zeit vorhanden ist, eine oder mehrere drahtlose Vorrichtungen (16) zu benachrichtigen, die von einer durch den Funkzugangsknoten (12) gesteuerten Zelle (14) versorgt werden, dass der aktuelle Übertragungsleistungspegel des Funkzugangsknotens (12) vor Ende eines Modifikationszeitraums eingestellt wird; und
als Reaktion auf das Bestimmen, dass nicht genügend Zeit vorhanden ist, Warten (906) mit dem Einstellen des aktuellen Übertragungsleistungspegels, bis zu einem unterschiedlichen Modifikationszeitraum.

2. Verfahren nach Anspruch 1, wobei jede Leistungspegel-Einstellung der Vielzahl von Leistungspegel-Einstellungen kleiner oder gleich einem Leistungseinstellungsschwellenwert ist.

3. Verfahren nach Anspruch 2, wobei der Leistungseinstellungsschwellenwert gleich 1 dB ist.

4. Verfahren nach Anspruch 2, ferner umfassend, für jede Leistungspegel-Einstellung der Vielzahl von Leistungspegel-Einstellungen, Benachrichtigen (300, 306, 312) von einer oder mehreren drahtlosen Vorrichtungen (16), die von einer durch den Funkzugangsknoten (12) der Leistungspegel-Einstellung des Übertragungsleistungspegels des Funkzugangsknotens (12) bereitgestellten Zelle (14) vor der Leistungspegel-Einstellung versorgt werden.

5. Verfahren nach Anspruch 4, wobei das Benachrichtigen der einen oder mehreren drahtlosen Vorrichtungen (16) das Senden (400, 408, 416) einer Paging-Nachricht an die eine oder mehreren drahtlosen Vorrichtungen (16) umfasst.

6. Verfahren nach Anspruch 1, ferner umfassend das Ausstrahlen (304, 310, 316, 406, 414, 422) an eine oder mehrere drahtlosen Vorrichtungen (16), die von einer durch den Funkzugangsknoten (12) bereitgestellten Zelle (14) versorgt werden, eines aktualisier-ten Übertragungsleistungspegels nach jeder Leis-tungspegel-Einstellung der Vielzahl von Leistungspegel-Einstellungen.

7. Verfahren nach Anspruch 6, wobei jede Leistungspegel-Einstellung der Vielzahl von Übertragungs-leistungspegel-Einstellungen innerhalb eines jewei-ligen Modifikationszeitraums abgeschlossen ist; und Ausstrahlen des aktualisierten Übertragungsleistungspegels in einem beginnenden Intervall eines nächsten dem jeweiligen Modifikationszeitraum unmittelbar folgenden Modifikationszeitraums.

8. Verfahren nach Anspruch 1, wobei jede Leistungspegel-Einstellung der Vielzahl von Leistungspegel-Einstellungen innerhalb eines Endintervalls eines jeweiligen Modifikationszeitraums abgeschlossen ist.

9. Verfahren nach einem der vorangehenden Ansprüche, ferner umfassend das Unterlassen (404, 412, 420), während der Zeit zwischen der Leistungseinstellung und dem Ende des Modifikationszeitraums, des Übertragens von Downlink-Übertragungen mit Quadraturamplitudenmodulation, QAM, während der Vielzahl von Übertragungsleistungspegel-Einstellungen.

10. Verfahren nach einem der vorangehenden Ansprüche, ferner umfassend das Unterlassen (404, 412, 420), während der Zeit zwischen der Leistungseinstellung und dem Ende des Modifikationszeitraums, des Übertragens von Downlink-Übertragungen während der Vielzahl von Übertragungsleistungspegel-Einstellungen.

11. Verfahren nach einem der vorangehenden Ansprüche, wobei der Funkzugangsknoten (12) eine Basisstation ist.

12. Verfahren nach einem der vorangehenden Ansprüche, wobei eine durch den Funkzugangsknoten (12) bereitgestellte Zelle (14) eine von einer Kapazitätszelle und einer Belegungszelle ist.

13. Computerlesbares Medium (22) umfassend Code-Abschnitte, die bei Ausführung auf einem Prozessor (20) den Prozessor zur Durchführung sämtlicher Schritte eines Verfahrens nach einem der vorangehenden Verfahrensansprüche konfigurieren.

14. Funkzugangsknoten (12) in einem zellularen Kommunikationsnetz, umfassend:

mindestens einen Prozessor (20); und einen mit dem Prozessor (20) gekoppelten Speicher (22), wobei der Speicher (22) Anweisungen enthält, die durch den mindestens einen Prozessor (20) ausführbar sind, wodurch der Funkzugangsknoten (12) zu Folgendem operativ ist:

Bestimmen eines Übertragungsleistungszielpegels aus einer Vielzahl von vorbestimmten Übertragungsleistungspegeln für den Funkzugangsknoten (12); Bestimmen, dass ein aktueller Übertra-gungsleistungspegel des Funkzugangs-knotens (12) eingestellt werden sollte, um den Übertragungsleistungszielpegel zu erreichen; als Reaktion auf das Bestimmen, dass der aktuelle Übertragungsleistungspegel des Funkzugangsknotens (12) eingestellt wer-den sollte, Einstellen eines Übertragungs-leistungspegels des Funkzugangsknotens (12) von dem aktuellen Übertragungsleis-tungspegel auf den Übertragungsleistungs-zielpegel über eine Vielzahl von Übertragungsleistungspegel-Einstellungen; Bestimmen, dass nicht genügend Zeit vorhanden ist, eine oder mehrere drahtlose Vorrichtungen (16) zu benachrichtigen, die von einer durch den Funkzugangsknoten (12) gesteuerten Zelle (14) versorgt wer-den, dass der aktuelle Übertragungsleis-tungspegel des Funkzugangsknotens (12) vor Ende eines Modifikationszeitraums eingestellt wird; und als Reaktion auf das Bestimmen, dass nicht genügend Zeit vorhanden ist, Warten mit der Einstellung des aktuellen Übertragungsleistungspegels bis zu einem unterschiedlichen Modifikationszeitraum.

**15.** Funkzugangsknoten nach Anspruch 14, der zur Durchführung des Verfahrens nach einem der Ansprüche 2 bis 8 ausgelegt ist.

**Revendications**

**1.** Procédé de fonctionnement d'un noeud d'accès radio (12) dans un réseau de communications cellulaire (10) comprenant :

la détermination (100) d'un niveau de puissance de transmission cible à partir d'une pluralité de niveaux de puissance de transmission prédéterminés pour le noeud d'accès radio (12) ;
la détermination (102) du fait qu'un niveau de puissance de transmission actuel du noeud d'accès radio (12) doit être ajusté pour atteindre le niveau de puissance de transmission cible ;
en réponse à la détermination du fait que le niveau de puissance de transmission actuel du noeud d'accès radio (12) doit être ajusté, l'ajustement (104) d'un niveau de puissance de transmission du noeud d'accès radio (12) du niveau de puissance de transmission actuel au niveau de puissance de transmission cible par l'intermédiaire d'une pluralité d'ajustements de niveau de puissance de transmission ;
la détermination (900) du fait qu'il n'y a pas assez de temps pour prévenir un ou plusieurs dispositifs sans fil (16) desservis par une cellule (14) commandée par le noeud d'accès radio (12) que le niveau de puissance de transmission actuel du noeud d'accès radio (12) sera ajusté avant la fin d'une période de modification ; et
en réponse à la détermination du fait qu'il n'y a pas assez de temps, l'attente (906) pour ajuster le niveau de puissance de transmission actuel jusqu'à une période de modification différente.

**2.** Procédé selon la revendication 1, dans lequel chaque ajustement de niveau de puissance de la pluralité d'ajustements de niveau de puissance de transmission est inférieur ou égal à un seuil d'ajustement de puissance.

**3.** Procédé selon la revendication 2, dans lequel le seuil d'ajustement de puissance est égal à 1 dB.

**4.** Procédé selon la revendication 2, comprenant en outre, pour chaque ajustement de niveau de puissance de la pluralité d'ajustements de niveau de puissance, la notification (300, 306, 312) à un ou plusieurs dispositifs sans fil (16) desservis par une cellule (14) fournie par le noeud d'accès radio (12) de l'ajustement de niveau de puissance du niveau de puissance de transmission du noeud d'accès radio (12) avant l'ajustement de niveau de puissance.

**5.** Procédé selon la revendication 4, dans lequel la notification au ou aux dispositif(s) sans fil (16) comprend l'envoi (400, 408, 416) d'un message de recherche au ou aux dispositif(s) sans fil (16).

**6.** Procédé selon la revendication 1, comprenant en outre la diffusion (304, 310, 316, 406, 414, 422) vers un ou plusieurs dispositifs sans fil (16) desservis par une cellule (14) fournie par le noeud d'accès radio (12) d'un niveau de puissance de transmission mis à jour après chaque ajustement de niveau de puissance de la pluralité d'ajustements de niveau de puissance.

**7.** Procédé selon la revendication 6, dans lequel chaque ajustement de niveau de puissance de la pluralité d'ajustements de niveau de puissance de transmission est achevé dans une période de modification respective ; et
la diffusion du niveau de puissance de transmission mis à jour se produit dans un intervalle de commencement d'une période de modification suivante qui suit immédiatement la période de modification respective.

**8.** Procédé selon la revendication 1, dans lequel chaque ajustement de niveau de puissance de la pluralité d'ajustements de niveau de puissance de transmission est achevé dans un intervalle de fin d'une période de modification respective.

**9.** Procédé selon l'une quelconque des revendications précédentes, comprenant en outre le non-recours (404, 412, 420), pendant le temps entre l'ajustement de puissance et la fin de la période de modification, à une transmission des transmissions en liaison descendante avec une modulation d'amplitude en quadrature, QAM, pendant la pluralité d'ajustements de niveau de puissance de transmission.

**10.** Procédé selon l'une quelconque des revendications précédentes, comprenant en outre le non-recours (404, 412, 420), pendant le temps entre l'ajustement de puissance et la fin de la période de modification, à une transmission des transmissions en liaison descendante pendant la pluralité d'ajustements de niveau de puissance de transmission.

**11.** Procédé selon l'une quelconque des revendications précédentes, dans lequel le noeud d'accès radio (12) est une station de base.

**12.** Procédé selon l'une quelconque des revendications précédentes, dans lequel une cellule (14) fournie par le noeud d'accès radio (12) est une cellule de capacité ou une cellule de couverture.

13. Support lisible par ordinateur (22) comprenant des parties de code qui, lorsqu'elles sont exécutées sur un processeur (20), configurent le processeur pour effectuer toutes les étapes d'un procédé selon l'une quelconque des revendications de procédé précédentes.

14. Noeud d'accès radio (12) dans un réseau de communications cellulaire, comprenant :

> au moins un processeur (20) ; et
> une mémoire (22) couplée au processeur (20), la mémoire (22) contenant des instructions exécutables par ledit au moins un processeur (20) moyennant quoi le noeud d'accès radio (12) est opérationnel pour :

>> déterminer un niveau de puissance de transmission cible à partir d'une pluralité de niveaux de puissance de transmission prédéterminés pour le noeud d'accès radio (12) ;
>> déterminer qu'un niveau de puissance de transmission actuel du noeud d'accès radio (12) doit être ajusté pour atteindre le niveau de puissance de transmission cible ;
>> en réponse à la détermination du fait que le niveau de puissance de transmission actuel du noeud d'accès radio (12) doit être ajusté, ajuster un niveau de puissance de transmission du noeud d'accès radio (12) du niveau de puissance de transmission actuel au niveau de puissance de transmission cible par l'intermédiaire d'une pluralité d'ajustements de niveau de puissance de transmission ;
>> déterminer qu'il n'y a pas assez de temps pour prévenir un ou plusieurs dispositifs sans fil (16) desservis par une cellule (14) commandée par le noeud d'accès radio (12) que le niveau de puissance de transmission actuel du noeud d'accès radio (12) sera ajusté avant la fin d'une période de modification ; et
>> en réponse à la détermination du fait qu'il n'y a pas assez de temps, attendre pour ajuster le niveau de puissance de transmission actuel jusqu'à une période de modification différente.

15. Noeud d'accès radio selon la revendication 14, conçu pour effectuer le procédé selon l'une quelconque des revendications 2 à 8.

FIG. 1

START

DETERMINE A TARGET TRANSMIT POWER LEVEL FOR THE RADIO NODE — 100

SHOULD THE CURRENT TRANSMIT POWER LEVEL OF THE RADIO ACCESS NODE BE ADJUSTED TO REACH THE TARGET TRANSMIT POWER LEVEL ? — 102

NO

YES — 104

ADJUST A POWER LEVEL OF THE RADIO ACCESS NODE FROM THE CURRENT TRANSMIT POWER LEVEL TO THE TARGET TRANSMIT POWER LEVEL VIA A PLURALITY OF TRANSMIT POWER LEVEL ADJUSTMENTS

END

**FIG. 2**

START

IS THE
LOADING OF THE FIRST
CELL WITHIN A NEW LOADING
RANGE OTHER THAN A LOADING RANGE
CORRESPONDING TO THE CURRENT
TRANSMIT POWER LEVEL
? — 200

NO

YES — 202

SET THE TARGET TRANSMIT POWER LEVEL FOR THE
RADIO ACCESS NODE TO CORRESPOND TO THE NEW
LOADING RANGE

CAN
THE CURRENT
TRANSMIT POWER LEVEL OF THE
RADIO ACCESS NODE BE ADJUSTED TO
REACH THE TARGET TRANSMIT
POWER LEVEL
? — 204

NO

YES — 206

ADJUST A POWER LEVEL OF THE RADIO ACCESS NODE
FROM THE CURRENT TRANSMIT POWER LEVEL TO THE
TARGET TRANSMIT POWER LEVEL VIA A PLURALITY OF
TRANSMIT POWER LEVEL ADJUSTMENTS

END

**FIG. 3**

START

NOTIFY ONE OR MORE WIRELESS DEVICES OF A FIRST INTERMEDIATE TRANSMIT POWER ADJUSTMENT — 300

ADJUST A POWER LEVEL OF THE RADIO ACCESS NODE FROM THE CURRENT TRANSMIT POWER LEVEL TO A FIRST INTERMEDIATE TRANSMIT POWER LEVEL — 302

BROADCAST TO THE ONE OR MORE WIRELESS DEVICES THE FIRST INTERMEDIATE TRANSMIT POWER LEVEL — 304

NOTIFY ONE OR MORE WIRELESS DEVICES OF A SECOND INTERMEDIATE TRANSMIT POWER ADJUSTMENT — 306

ADJUST THE POWER LEVEL OF THE RADIO ACCESS NODE FROM THE FIRST INTERMEDIATE TRANSMIT POWER LEVEL TO A SECOND INTERMEDIATE TRANSMIT POWER LEVEL — 308

BROADCAST TO THE ONE OR MORE WIRELESS DEVICES THE SECOND INTERMEDIATE TRANSMIT POWER LEVEL — 310

⋮

NOTIFY ONE OR MORE WIRELESS DEVICES OF A TARGET TRANSMIT POWER ADJUSTMENT — 312

ADJUST THE POWER LEVEL OF THE RADIO ACCESS NODE FROM THE SECOND INTERMEDIATE TRANSMIT POWER LEVEL TO A TARGET TRANSMIT POWER LEVEL — 314

BROADCAST TO THE ONE OR MORE WIRELESS DEVICES THE TARGET TRANSMIT POWER LEVEL — 316

END

**FIG. 4**

MODIFICATION PERIOD (E.G. ≥ 640 MS)

PAGING

BEGINNING
INTERVAL

PAGING

END INTERVAL

BROADCAST
UPDATED TRANSMIT
POWER LEVEL

BROADCAST

POWER ADJUSTMENT
(E.G. < 10 MS)

POWER ADJUSTMENT
(E.G. < 10 MS)

**FIG. 5**

START

SEND PAGING MESSAGE TO ONE OR MORE WIRELESS DEVICES — 400

ADJUST A POWER LEVEL OF THE RADIO ACCESS NODE FROM THE CURRENT TRANSMIT POWER LEVEL TO A FIRST INTERMEDIATE TRANSMIT POWER LEVEL WITHIN A PREDEFINED AMOUNT OF TIME BEFORE THE END OF A MODIFICATION PERIOD — 402

REDUCE MODULATION ORDER OR REFRAIN FROM USING HIGHER ORDER QAM OR TRANSMITTING AT ALL FROM THE TIME OF POWER ADJUSTMENT UNTIL THE END OF THE MODIFICATION PERIOD — 404

BROADCAST SYSTEM INFORMATION INDICATING THE TRANSMIT POWER LEVEL OF THE RADIO ACCESS NODE IS THE FIRST INTERMEDIATE TRANSMIT POWER LEVEL — 406

SEND PAGING MESSAGE TO ONE OR MORE WIRELESS DEVICES — 408

ADJUST THE POWER LEVEL OF THE RADIO ACCESS NODE FROM THE FIRST INTERMEDIATE TRANSMIT POWER LEVEL TO A SECOND INTERMEDIATE TRANSMIT POWER LEVEL WITHIN A PREDEFINED AMOUNT OF TIME BEFORE THE END OF A MODIFICATION PERIOD — 410

REDUCE MODULATION ORDER OR REFRAIN FROM USING HIGHER ORDER QAM OR TRANSMITTING AT ALL FROM THE TIME OF POWER ADJUSTMENT UNTIL THE END OF THE MODIFICATION PERIOD — 412

BROADCAST SYSTEM INFORMATION INDICATING THE TRANSMIT POWER LEVEL OF THE RADIO ACCESS NODE IS THE SECOND INTERMEDIATE TRANSMIT POWER LEVEL — 414

CONTINUE TO 6B

**FIG. 6A**

EP 3 254 507 B1

CONTINUE
FROM 6A

SEND PAGING MESSAGE TO ONE OR MORE WIRELESS DEVICES — 416

ADJUST THE POWER LEVEL OF THE RADIO ACCESS NODE FROM THE
SECOND INTERMEDIATE TRANSMIT POWER LEVEL TO A TARGET
TRANSMIT POWER LEVEL WITHIN A PREDEFINED AMOUNT OF TIME
BEFORE THE END OF A MODIFICATION PERIOD — 418

REDUCE MODULATION ORDER OR REFRAIN FROM USING HIGHER
ORDER QAM OR TRANSMITTING AT ALL FROM THE TIME OF POWER
ADJUSTMENT UNTIL THE END OF THE MODIFICATION PERIOD — 420

BROADCAST SYSTEM INFORMATION INDICATING THE TRANSMIT
POWER LEVEL OF THE RADIO ACCESS NODE IS THE TARGET
TRANSMIT POWER LEVEL — 422

END

**FIG. 6B**

START

500
HAS THE LOADING OF
THE FIRST CELL DECREASED
?
NO

YES

502
SHOULD AND CAN
THE CURRENT TRANSMIT POWER
LEVEL BE REDUCED
?
NO

YES

504
DETERMINE NEIGHBOR CELL LOADING

506
IS NEIGHBOR
CELL LOADING BELOW A NEIGHBOR
CELL LOADING THRESHOLD
?
NO

YES

508
SET THE TARGET TRANSMIT POWER LEVEL BASED ON
THE LOADING AND A LOADING DECREASE TABLE

END

**FIG. 7**

START

HAS THE LOADING OF THE
FIRST CELL INCREASED
?
— 600
NO

YES

SHOULD AND CAN
THE CURRENT TRANSMIT POWER
LEVEL BE INCREASED
?
— 602
NO

YES
— 604

SET THE TARGET TRANSMIT POWER LEVEL BASED
ON THE LOADING AND A LOADING INCREASE TABLE

END

**FIG. 8**

FIG. 9

START

RECEIVE A CELL LOADING FROM A NEIGHBOR CELL — 800

IS THE
CELL LOADING ABOVE A LOADING
THRESHOLD
? — 802

NO

YES

SHOULD AND CAN
THE CURRENT TRANSMIT POWER
LEVEL BE INCREASED
? — 804

NO

YES

SET THE TARGET TRANSMIT POWER LEVEL BASED ON
THE CELL LOADING FROM THE NEIGHBOR CELL — 806

END

**FIG. 10**

START

900

IS
THERE ENOUGH TIME TO
NOTIFY ONE OR MORE WIRELESS
DEVICES
?

NO → WAIT FOR NEXT MODIFICATION PERIOD    906

YES    902

NOTIFY THE ONE OR MORE WIRELESS DEVICES

904

PERFORM MULTIPLE TRANSMIT POWER LEVEL
ADJUSTMENTS

END

**FIG. 11**

**FIG. 12**

**FIG. 13**

RADIO ACCESS NODE
<u>12</u>

TARGET TRANSMIT POWER LEVEL
DETERMINING MODULE
<u>40</u>

CURRENT TRANSMIT POWER LEVEL
ADJUSTMENT DETERMINING  MODULE
<u>42</u>

POWER LEVEL ADJUSTMENT MODULE
<u>44</u>

## FIG. 14

**EP 3 254 507 B1**

## REFERENCES CITED IN THE DESCRIPTION

**Patent documents cited in the description**

- WO 0225836 A2

- WO 2013192356 A

**Non-patent literature cited in the description**

- Cell wilting and blossoming for energy efficiency. Wireless Communications. IEEE, October 2011, vol. 18, 50-57